# EUROPEAN PATENT APPLICATION

(11) **EP 3 974 211 A1**
(43) Date of publication of application: **30.03.2022**
(21) Application number: 21194960.7
(22) Date of filing: 06.09.2021
(51) Int. Cl.: B60C 11/24

(54) **TIRE AND WEAR DEGREE DETECTION SYSTEM**

(30) Priority: 23.09.2020 JP 2020158449
(71) Applicant: SUMITOMO RUBBER INDUSTRIES LIMITED, Kobe-shi Hyogo-ken (JP)
(72) Inventor: SETOKAWA, Hiroto, Kobe-shi,, 651-0072 (JP); FUSHIHARA, Kazuhisa, Kobe-shi (JP); SUGIMOTO, Mutsuki, Kobe-shi, 651-0072 (JP); NAKAO, Yukio, Kobe-shi,, 651-0072, (JP)
(74) Representative: Manitz Finsterwald Patent- und Rechtsanwaltspartnerschaft mbB

(57) **Abstract**

An object is to improve the accuracy of tire wear detection. A tire 10 includes a first magnetic body 61 disposed at a predetermined position in a tread portion 34, a magnetic sensor 63 disposed radially inward of the first magnetic body 61, and a second magnetic body 62 disposed closer to the magnetic sensor 63 than the first magnetic body 61 is. At a position where the magnetic sensor 63 is disposed, a direction of a magnetic force line 61a emitted by the first magnetic body 61 and a direction of a magnetic force line 62a emitted by the second magnetic body 62 are different from each other.

## Description

### BACKGROUND OF THE INVENTION

### Field of the Invention

The present invention relates to a tire and a wear degree detection system.

### Description of the Background Art

Japanese Laid-Open Patent Publication No. 2019-203831 discloses a wear measuring technology for a pneumatic tire. In the pneumatic tire disclosed in Japanese Laid-Open Patent Publication No. 2019-203831, a magnetic body is included in a tread portion thereof. Furthermore, a magnetic sensor for detecting the magnetic flux density of the magnetic field formed by the magnetic body is disposed at a radially inner position corresponding to the magnetic body. The magnetic body is formed by dispersing powdery particles of a hard magnetic material in a polymer material and is magnetized in one direction. The magnetic body is included in the tread portion such that the magnetization direction of the magnetic body and the tire radial direction coincide with each other. For the pneumatic tire, the wear state of the tire can be grasped by measuring the strength of the magnetic field that changes due to wear.

Meanwhile, the magnetic sensor that detects the magnetic flux density has temperature dependence. The magnetic field also depends on temperature. Thus, when the temperature changes, the output of the magnetic sensor changes. Therefore, it is necessary to perform temperature correction on the output of the magnetic sensor. If the temperature correction is not performed properly, it is not possible to know whether the magnetic flux density has decreased due to wear or the magnetic flux density has decreased due to temperature change, so that the degree of wear of the tire is erroneously recognized. As for a pneumatic tire having a magnetic body included in a tread portion thereof, it is preferable that the strength of a magnetic field that changes due to wear can be measured more accurately.

### SUMMARY OF THE INVENTION

A tire disclosed herein includes: a tread portion having a continuous ground-contact surface along an outer peripheral surface of the tire in a circumferential direction; a first magnetic body disposed at a predetermined position in the tread portion; a magnetic sensor disposed radially inward of the first magnetic body; and a second magnetic body disposed closer to the magnetic sensor than the first magnetic body is. At a position where the magnetic sensor is disposed, a direction of a magnetic force line emitted by the first magnetic body and a direction of a magnetic force line emitted by the second magnetic body are different from each other. In the tire disclosed herein, when the tread portion is worn, the first magnetic body is worn. The more the first magnetic body is worn, the lower the magnetic flux density of the magnetic force line emitted from the first magnetic body is. On the other hand, the magnetic flux density of the magnetic force line emitted from the second magnetic body does not change. Therefore, the degree of wear of the tire can be detected on the basis of the magnetic force line detected at the position where the magnetic sensor is disposed. In addition, the magnetic flux density of the magnetic force line emitted from the first magnetic body and the magnetic flux density of the magnetic force line emitted from the second magnetic body similarly depend on temperature when detected by the magnetic sensor. Since the second magnetic body is provided in addition to the first magnetic body as described above, the influence of disturbance factors such as temperature can be reduced to be small.

A wear degree detection system disclosed herein includes: the tire; a storage unit storing therein a direction of an initial magnetic force line detected by the magnetic sensor; and a wear degree acquisition unit configured to acquire a degree of wear of the tread portion on the basis of the direction of the magnetic force line detected by the magnetic sensor and the direction of the initial magnetic force line. With the wear degree detection system disclosed herein, it is possible to grasp how much the tread portion has been worn from a new tire.

### BRIEF DESCRIPTION OF THE DRAWINGS

FIG. 1 is a cross-sectional view of a tire 10;
FIG. 2 is a schematic diagram showing the arrangement of a magnetic sensor 63;
FIG. 3 is a schematic diagram showing a magnetic force line detected at a position P1 where the magnetic sensor 63 is disposed;
FIG. 4 is a schematic diagram showing the magnetic force line detected at the position P1 where the magnetic sensor 63 is disposed;
FIG. 5 is a schematic diagram showing a modification of the tire 10;
FIG. 6 is a schematic diagram showing another modification of the tire 10;
FIG. 7 is a schematic diagram showing still another modification of the tire 10; and
FIG. 8 is a schematic diagram showing a sensor module 100.

### DESCRIPTION OF THE PREFERRED EMBODIMENTS

Hereinafter, a tire and a wear degree detection system disclosed herein will be described with reference to the drawings. The present invention is not limited to the following embodiments. Each drawing is schematically drawn and does not necessarily reflect the actual one. For example, the dimensional relationships (length, width, thickness, etc.) in each drawing do not necessarily reflect the actual dimensional relationships. In addition, each drawing shows only one example, and does not limit the present invention unless otherwise specified. Moreover, members and parts that perform the same effect are designated as appropriate by the same reference characters, and the redundant description thereof is omitted. In the present description, "X to Y" means "not less than X and not greater than Y" unless otherwise specified.

### «Tire 10»

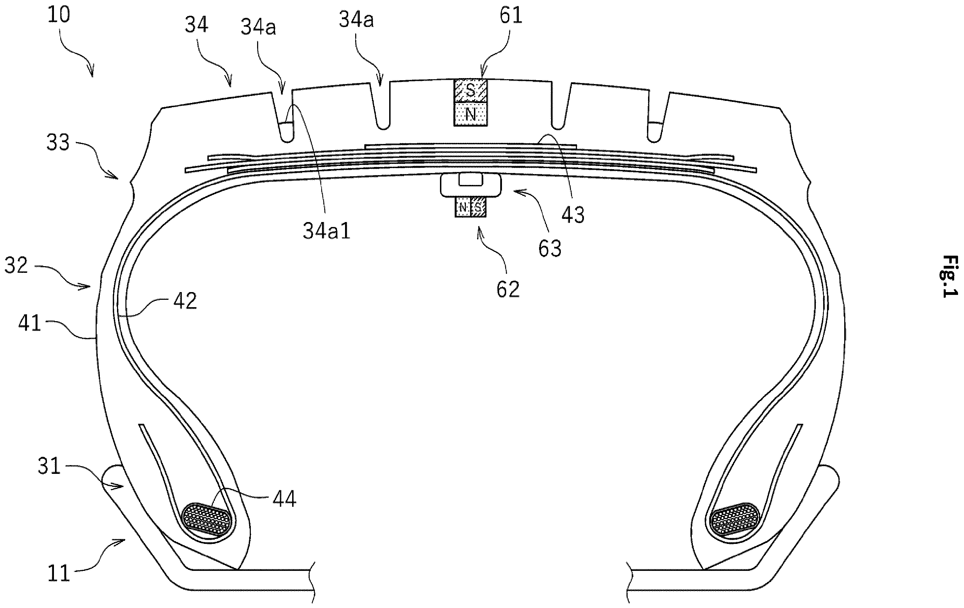

FIG. 1 is a cross-sectional view of a tire 10. FIG. 1 shows a cross-section of the tire 10 mounted on a wheel rim 11, along the radial direction of the tire 10. The tire 10 is a so-called pneumatic tire. As shown in FIG. 1, the tire 10 is mounted on the wheel rim 11 so as to cover the outer periphery of the wheel rim 11. The space surrounded by the tire 10 and the wheel rim 11 is filled with air, and the air is held therein.

### <Portions of Tire 10>

As shown in FIG. 1, the tire 10 includes bead portions 31, sidewall portions 32, shoulder portions 33, and a tread portion 34.

Each bead portion 31 is a portion to be fitted to a wheel, and is a portion that is fitted to the wheel rim 11 over the entire periphery thereof to fix the tire 10 and the wheel rim 11. Each sidewall portion 32 is a portion along the radial direction at a side surface of the tire 10. The sidewall portion 32 is a portion where the tire bends the most.

The tread portion 34 is a portion that comes into direct contact with a road surface, is provided at the outer peripheral surface of the tire 10, and has a continuous ground-contact surface along the outer peripheral surface in the circumferential direction. The tread portion 34 is a portion that gradually wears due to friction with a road surface. The tread portion 34 has a required thickness, and a groove 34a is formed thereon in a predetermined pattern. The groove 34a is also referred to as a tread pattern.

In the tread portion 34, slip signs 35 are provided at a plurality of predetermined locations in the circumferential direction. As each slip sign 35, a portion raised at a predetermined height is provided at the bottom of the groove 34a of the tread portion 34. When the wear of the tread portion 34 progresses and it becomes time to replace the tire 10, the raised portions appear in the groove 34a of the tread portion 34. The slip signs 35 indicate the time to replace the tire 10, but it is not directly known how much the groove 34a of the tread portion 34 has been worn. How much the groove 34a of the tread portion 34 has been worn can be grasped by actually measuring the depth of the groove 34a.

Each shoulder portion 33 is a portion connecting the sidewall portion 32 and the tread portion 34. The shoulder portion 33 serves to dissipate the heat generated in the tread portion 34 and the internal portion during running due to friction with a road surface.

### <Structure of Tire 10>

Moreover, the tire 10 is a molded product of rubber 41. The rubber 41 includes a carcass 42 forming the skeleton of the tire 10, and tire cords referred to as a belt 43, a bead wire 44, etc. For the carcass 42, for example, a resin cord made of a polymer material such as polyester, nylon, and rayon, or the like can be used. For the belt 43, for example, a steel wire in which high carbon steel is bundled is used. For the bead wire 44, for example, a steel wire in which high carbon steel is bundled is used. As described above, the tire cords such as the carcass 42, the belt 43, and the bead wire 44 are members that impart the required mechanical strength to the tire 10. Each tire cord is made of a material having the required mechanical strength.

The carcass 42 is a continuous cord layer inside the tread portion 34, the shoulder portions 33, the sidewall portions 32, and the bead portions 31 on both sides of the tire 10. The belt 43 is a cord layer that is disposed on the radially outer side of the carcass 42 in the tread portion 34 and that is continuous in the circumferential direction. The bead wire 44 is a ringshaped reinforcing member in which steel wires are bundled and covered with rubber. The bead wire 44 is disposed in each of the bead portions 31 on both sides of the tire 10. Each end portion of the carcass 42 is turned up around the bead wire 44. The bead wire 44 holds the end portion of the carcass 42. The bead wire 44 serves to receive the tension applied to the carcass 42 and fix to the rim. Since the tire cords are included as described above, the mechanical strength to withstand the load, impact, filling air pressure, etc., is ensured. In addition, a rubber layer called an inner liner is formed on the inner peripheral surface of the tire 10, that is, on the inner side of the tire cords, to ensure airtightness. A rubber layer called an over-layer is formed on the inner side of the tire cords, and the tread portion 34 is formed on a surface portion (outer portion) of the over-layer.

Although a pneumatic tire having a so-called radial structure is illustrated here, the structure of the tire is not limited to the radial structure unless otherwise specified. The tire disclosed herein can detect the wear of the tread portion as described above. The tire preferably includes a tread portion having a continuous ground-contact surface along the outer peripheral surface in the circumferential direction. From this viewpoint, the structure of the tire is not particularly mentioned. The tire may have a so-called bias structure. In addition, the tire may be a tube tire having a tube. The tire may be a re-tread tire in which only the tread portion 34 can be replaced.

### <Wear Measurement Structure>

As shown in FIG. 1, the tire 10 includes a first magnetic body 61, a second magnetic body 62, and a magnetic sensor 63.

### <First Magnetic Body 61>

The first magnetic body 61 is disposed at a predetermined position in the tread portion 34. In this embodiment, the first magnetic body 61 is embedded at a predetermined position in a projection portion of the tread portion 34. For the first magnetic body 61, for example, powdery particles (magnetic powder) made of a hard magnetic material are preferably dispersed in a polymer material. The dispersed magnetic powder is preferably magnetized in a predetermined direction.

As a method for providing the first magnetic body 61 in the tread portion 34, for example, the following method can be adopted. A hole for embedding the first magnetic body 61 is formed at a predetermined position on the projection portion of the tread portion 34. Separately, the first magnetic body 61, which is formed by dispersing the powdery particles (magnetic powder) made of the hard magnetic material in the polymer material, is molded into a shape that fits the hole. The molded first magnetic body 61 is magnetized in a predetermined direction. Then, the magnetized first magnetic body 61 is mounted into the hole formed in the projection portion of the tread portion 34, and is adhered thereto.

As another method for providing the first magnetic body 61 in the tread portion 34, for example, the first magnetic body 61 magnetized in a predetermined direction is prepared. The prepared first magnetic body 61 is molded so as to fit a hole formed in the projection portion of the tread portion 34. The molded first magnetic body 61 is mounted into the hole formed in the projection portion of the tread portion 34, and is adhered thereto. As described above, the magnetization may be performed before the first magnetic body 61 is embedded in the tread portion 34 or after the first magnetic body 61 is embedded in the tread portion 34. The methods for providing the first magnetic body 61 in the tread portion 34 have been described as examples, but the method for providing the first magnetic body 61 in the tread portion 34 is not limited to the methods described as examples. As for the method for magnetizing the first magnetic body 61 and the material of the magnetic powder, various methods and materials can be adopted.

### <Magnetic Powder>

From the viewpoint that the coercive force after magnetization is large and the magnetic powder does not easily demagnetize, preferable examples of the magnetic powder include magnetic powders for producing alnico magnets mainly composed of aluminum, nickel, cobalt, and iron, ferrite magnets mainly composed of iron oxide, samarium magnets mainly composed of samarium and iron, and neodymium magnets mainly composed of neodymium, iron, and boron.

Specific examples of alnico magnets include Al-Ni-Co-Fe-Cu, specific examples of ferrite magnets include Fe₂O₃-SrO, specific examples of samarium magnets include Sm-Co-Fe-Cu and Sm-Fe-N, and specific examples of neodymium magnets include Nd-Fe-B-Dy, Nd-Fe-Nb-B, and Nd-Pr-Fe-Nb-B.

Moreover, two or more types of the above-described respective magnetic powders may be selected and used. For example, a samarium-ferrite magnetic body and a samarium-neodymium magnetic body can be formed by mixing a ferrite magnetic powder and a samarium magnetic powder and mixing a samarium magnetic powder and a neodymium magnetic powder, respectively.

When the dispersibility in the polymer material during the formation of the first magnetic body 61 and the wear due to the metal particles are taken into consideration, the particle size of the magnetic powder is preferably not greater than 400 µm and more preferably not greater than 250 µm.

### <Polymer Material Used for First Magnetic Body 61>

As the polymer material used for the first magnetic body 61, a resin material or rubber material capable of exhibiting elasticity in a cured state is preferable from the viewpoint of fully exhibiting the characteristics as a tire, or a resin material or rubber material capable of exhibiting the same wear characteristics as a tread rubber composition after being cured is preferable from the viewpoint that the magnetic body formed by dispersing the magnetic powder wears like tread rubber and provides stable ride comfort.

When the fact that the portion where the first magnetic body 61 is provided is the tread portion is taken into consideration, among the above-described polymer materials, a rubber material having the same blending formula as a tread rubber composition used for the tread portion 34 may be used as the polymer material used for the first magnetic body 61. For the first magnetic body 61, for example, the magnetic powder may be dispersed in a rubber material having the same blending formula as the tread rubber composition used for the tread portion 34. In addition, for example, a part of a filler in the blending formula of the tread rubber composition may be replaced with the magnetic powder. The blending amount of the magnetic powder in the first magnetic body 61 is preferably 10% by mass to 70% by mass, more preferably 30% by mass to 70% by mass, and further preferably 40% by mass to 70% by mass.

### <Magnetism of First Magnetic Body 61>

From the viewpoint of being able to reliably measure the magnetic flux density of the magnetic body without being influenced by geomagnetism, the first magnetic body 61 is preferably configured to have a magnetic flux density of 0.05 mT or more at a measurement position where the magnetic sensor 63 is disposed. In addition, from the viewpoint of being able to reliably measure the magnetic flux density of the first magnetic body 61 by the magnetic sensor 63 even under the influence of magnetism and attenuation due to the steel cord provided inside the tire, the first magnetic body 61 is more preferably configured to have a magnetic flux density of 0.5 mT or more at the measurement position of the magnetic sensor 63. In consideration of such viewpoints, the first magnetic body 61 is preferably configured to have a magnetic flux density of 1 mT or more at the surface of the first magnetic body 61.

Meanwhile, from the viewpoint of preventing the magnetic force of the first magnetic body 61 from adversely affecting other electronic devices mounted on a vehicle, the surface magnetic flux density of the magnetic body is preferably, for example, not greater than about 600 mT. From the viewpoint of preventing the adhesion of metal pieces such as nails that have fallen on the road surface during running on a road, the magnetic flux density of the first magnetic body 61 measured at the surface of the tread portion 34 is more preferably, for example, not greater than about 60 mT. The magnetic flux density of the first magnetic body 61 can be measured with a Tesla meter. For example, the surface magnetic flux density of the first magnetic body 61 may be a value measured by bringing the Tesla meter into direct contact with the surface of the magnetized first magnetic body 61. For magnetizing the first magnetic body 61, a known magnetizing device, for example, a condenser type magnetizing power supply device, a magnetizing coil, a magnetizing yoke, etc., can be used.

### <Magnetic Sensor 63>

The magnetic sensor 63 is disposed radially inward of the first magnetic body 61. In this embodiment, the magnetic sensor 63 is disposed on the inner peripheral surface of the tire 10 on the radially inner side of the portion where the first magnetic body 61 is embedded in the tread portion 34.

As the magnetic sensor 63, a sensor that detects the direction of a magnetic force line at the position where the magnetic sensor is disposed can be used. As a sensor element used for the magnetic sensor 63, a sensor element capable of detecting the direction and strength of a magnetic field can be used. As such a sensor element, for example, a magneto resistive (MR) element such as an SMR element, an AMR element, a GMR element, and a TMR element can be used. In addition, a Hall element may be used as the sensor element used for the magnetic sensor. Moreover, a magneto-impedance element may be used as the sensor element used for the magnetic sensor. In addition to the sensor elements mentioned here, various sensor elements capable of detecting the strength of a magnetic field can be adopted for the magnetic sensor 63. The effective measurement range for a magnetic flux density in the magnetic sensor 63 is preferably, for example, 1 mT or more.

The SMR element is a semiconductor magneto resistive (SMR) element. The SMR element is a sensor that utilizes a change in resistance value caused by Lorentz force.

The AMR element is an anisotropic-magneto-resistive (AMR) element. The AMR element is composed of, for example, a Si or glass substrate and a thin film that is formed on the substrate and that is made of an alloy mainly composed of a ferromagnetic metal such as Ni and Fe. By patterning the AMR element, the domain walls (boundaries between magnetic domains) are aligned in the longitudinal direction, so that the AMR element exhibits shape anisotropy. The AMR element has a characteristic that when a current is passed through the ferromagnetic thin film metal and a magnetic field is applied in a direction perpendicular to the direction of the current, the resistance value decreases according to the strength of the magnetic field.

The GMR element is a giant magneto resistive (GMR) element that utilizes a giant magneto resistive effect. The GMR element is a laminated film of strong magnetic body (pin layer)-non-magnetic metal-strong magnetic body (free layer), and the degree of electron scattering changes and the resistance value changes between when the magnetization of the pin layer and the magnetization of the free layer are antiparallel and when the direction of magnetization of the pin layer and the direction of magnetization of the free layer are the same.

The TMR element is a tunnel magneto resistive (TMR) element. The TMR element is a laminated film of strong magnetic body (pin layer)-insulator-strong magnetic body (free layer), and the ratio of electrons passing through the insulator changes and the resistance value changes due to a tunnel effect, between when the magnetization of the pin layer and the magnetization of the free layer are antiparallel and when the direction of magnetization of the pin layer and the direction of magnetization of the free layer are the same.

The Hall element is an element that detects magnetism using a Hall effect. According to the Hall element, when a current is passed through a semiconductor thin film or the like, a voltage corresponding to a magnetic flux density or direction is outputted due to the Hall effect.

The magneto-impedance (MI) element is an element that detects an external magnetic field by utilizing a magneto-impedance effect.

The magnetic sensor 63 may include one sensor element or a plurality of sensor elements. For example, two or more sensor elements may be disposed in one sensor package forming a part of the magnetic sensor 63.

For example, if the sensitivity direction of the sensor element used for the magnetic sensor 63 has directivity, three sensor elements having sensitivity directions directed in three orthogonal axial directions are preferably included in one sensor package. Accordingly, the magnetic sensor 63 that can obtain the magnitude and the direction of a magnetic flux density at the position where the magnetic sensor 63 is disposed can be obtained.

Moreover, the magnetic sensor 63 may include a first sensor element and a second sensor element. Here, the sensitivity direction of the first sensor element is preferably directed so as to correspond to the direction of the magnetic force line of the first magnetic body 61 at the position where the magnetic sensor 63 is disposed. The sensitivity direction of the second sensor element is preferably directed so as to correspond to the direction of the magnetic force line of the second magnetic body 62. In this case, the magnitude of a magnetic flux density corresponding to the direction of the magnetic force line of the first magnetic body 61 can be detected by the first sensor element. In addition, the magnitude of a magnetic flux density corresponding to the direction of the magnetic force line of the second magnetic body 62 can be detected by the second sensor element. The magnitude and the direction of the magnetic flux density at the position where the magnetic sensor 63 is disposed can be obtained from the magnitude of the magnetic flux density obtained by the first sensor element and the magnitude of the magnetic flux density obtained by the second sensor element.

A plurality of sensor elements may be incorporated in one sensor package forming a part of the magnetic sensor 63 as described above. In addition, the same type of elements may be used as the sensor elements incorporated in one sensor package. Moreover, the sensor elements incorporated in one sensor package may be a combination of different types of elements such as a Hall element and a magneto resistive element. As the magnetic sensor, a magnetic sensor having various functions is available on the market, and a magnetic sensor having an appropriate function as the magnetic sensor 63 is preferably adopted as appropriate.

### <Second Magnetic Body 62>

The second magnetic body 62 is disposed closer to the magnetic sensor 63 than the first magnetic body 61 is. In this embodiment, the second magnetic body 62 is stacked on the magnetic sensor 63 on the radially inner side of the tire 10. For the second magnetic body 62, a pre-magnetized hard magnetic body can be used. The second magnetic body 62 is preferably composed of a hard magnetic body. In addition, the surface magnetic flux density of the second magnetic body 62 may be lower than that of the first magnetic body 61.

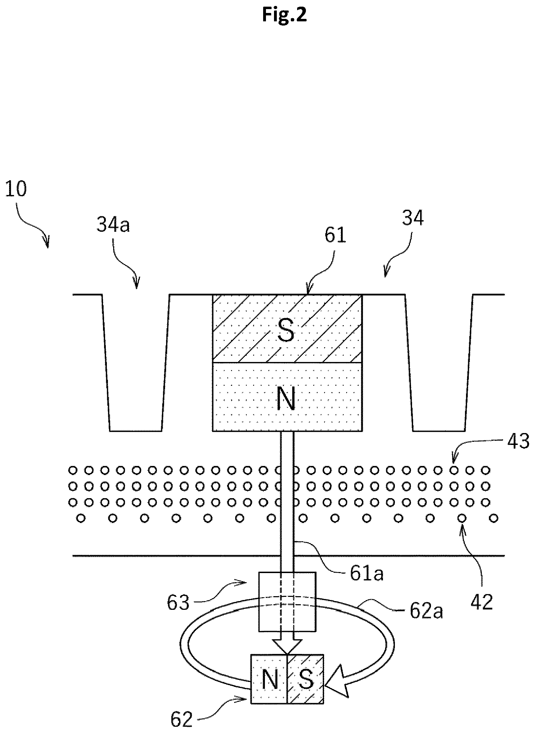

In the tire 10, at the position where the magnetic sensor 63 is disposed, the direction of the magnetic force line emitted by the first magnetic body 61 and the direction of the magnetic force line emitted by the second magnetic body 62 are different from each other. FIG. 2 is a schematic diagram showing the arrangement of the magnetic sensor 63. FIG. 2 shows the arrangement of the magnetic sensor 63, the first magnetic body 61, and the second magnetic body 62. In addition, FIG. 2 shows a magnetic force line 61a of the first magnetic body 61 and a magnetic force line 62a of the second magnetic body 62 at the position where the magnetic sensor 63 is disposed. In the form shown in FIG. 2, the magnetic force line 61a of the first magnetic body 61 is directed in the thickness direction of the tire 10 at the position where the magnetic sensor 63 is disposed. The magnetic force line 62a of the second magnetic body 62 is directed along a plane orthogonal to the thickness direction of the tire 10 at the position where the magnetic sensor 63 is disposed. As described above, at the position where the magnetic sensor 63 is disposed, the magnetic force line 62a of the second magnetic body 62 is preferably directed in a direction different from that of the magnetic force line 61a of the first magnetic body 61.

The first magnetic body 61 is embedded in the tread portion 34. The first magnetic body 61 is magnetized such that the radially inner side thereof is a north pole and the radially outer side (surface side) thereof is a south pole in the thickness direction of the tread portion 34. Therefore, the magnetic force line 61a of the first magnetic body 61 is directed in the thickness direction of the tire 10 at the position where the magnetic sensor 63 is disposed. The second magnetic body 62 is disposed so as to be stacked on the radially inner side of the magnetic sensor 63. The second magnetic body 62 is magnetized such that one side thereof along the width direction of the tire 10 is a north pole and the other side thereof is a south pole. As a result, the magnetic force line 62a of the second magnetic body 62 is directed along a level plane orthogonal to the thickness direction of the tire 10 at the position where the magnetic sensor 63 is disposed. In this embodiment, the magnetic force line 62a of the second magnetic body 62 is directed along the width direction of the tire 10 at the position where the magnetic sensor 63 is disposed. That is, at the position where the magnetic sensor 63 is disposed, the magnetic force line 61a of the first magnetic body 61 and the magnetic force line 62a of the second magnetic body 62 are orthogonal to each other.

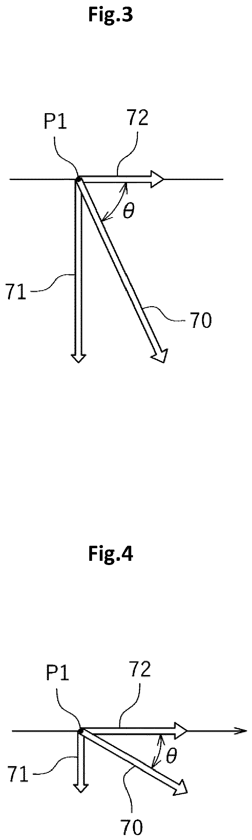

FIG. 3 and FIG. 4 are each a schematic diagram showing a magnetic force line detected at a position P1 where the magnetic sensor 63 is disposed. In each of FIG. 3 and FIG. 4, among the magnetic force lines detected at the position P1 where the magnetic sensor 63 is disposed, a first vector 71 corresponding to the direction and the magnitude of the magnetic flux density of the magnetic force line 61a of the first magnetic body 61 and a second vector 72 corresponding to the direction and the magnitude of the magnetic flux density of the magnetic force line 62a of the second magnetic body 62 are extracted, and a composite vector 70 thereof is shown. FIG. 3 shows a state where the tire 10 (see FIG. 2) is new. FIG. 4 shows a state where the tread portion 34 (see FIG. 2) has been worn.

The magnetic sensor 63 may be, for example, one that can detect the magnitude and the direction of the magnetic flux density at the position where the magnetic sensor 63 is disposed. If an external magnetic field that causes other disturbances is not taken into consideration, the magnitude and the direction of the magnetic flux density corresponding to the composite vector 70 can be detected by the magnetic sensor 63. In addition, the magnetic sensor 63 may include a first sensor element whose sensitivity direction is directed so as to correspond to the direction of the magnetic force line 61a of the first magnetic body 61, and a second sensor element whose sensitivity direction is directed so as to correspond to the direction of the magnetic force line 62a of the second magnetic body 62. In this case, the first vector 71 and the second vector 72 can be detected, and the composite vector 70 thereof can be obtained by calculation. The direction of the magnetic force line at the position where the magnetic sensor 63 is disposed can be obtained, for example, as an inclination θ with respect to a predetermined reference plane in the magnetic sensor 63. The inclination with respect to the reference plane may be adjusted in advance by initialization or calibration.

In the form shown in FIG. 2, when the tread portion 34 is worn, the first magnetic body 61 is worn. As shown in FIG. 4, the more the first magnetic body 61 is worn, the lower the magnetic flux density of the magnetic force line 61a emitted by the first magnetic body 61 is. Accordingly, the first vector 71 along the direction of the magnetic force line 61a of the first magnetic body 61 becomes smaller. On the other hand, the magnetic flux density of the magnetic force line 62a emitted from the second magnetic body 62 does not change. Therefore, as the wear of tire 10 progresses and the magnetic flux density of the magnetic force line 61a emitted from the first magnetic body 61 becomes lower, the influence of the first vector 71 on the composite vector 70 is decreased, and the influence of the second vector 72 on the composite vector 70 is increased. Therefore, the direction of the composite vector 70 approaches the second vector 72.

The tire 10 includes the first magnetic body 61 disposed at the predetermined position in the tread portion 34, the magnetic sensor 63 disposed radially inward of the first magnetic body 61, and the second magnetic body 62 disposed closer to the magnetic sensor 63 than the first magnetic body 61 is. At the position where the magnetic sensor 63 is disposed, the direction of the magnetic force line 61a emitted by the first magnetic body 61 and the direction of the magnetic force line 62a emitted by the second magnetic body 62 are different from each other.

The output value of the sensor element used for the magnetic sensor 63 may have temperature dependence. The direction θ of the magnetic force line at the position where the magnetic sensor 63 is disposed is due to the magnetic field generated by the first magnetic body 61 and the second magnetic body 62. In the case where the output value of the sensor element used for the magnetic sensor 63 has temperature dependence, when the magnetic flux density of the magnetic force line 61a emitted from the first magnetic body 61 is decreased due to temperature change, the magnetic flux density of the magnetic force line 62a emitted from the second magnetic body 62 is similarly decreased. Therefore, the direction θ of the magnetic force line detected by the magnetic sensor 63 does not depend on temperature, but depends on the degree of wear of the first magnetic body 61.

In the tire 10, at the position where the magnetic sensor 63 is disposed, the direction of the magnetic force line 61a emitted by the first magnetic body 61 and the direction of the magnetic force line 62a emitted by the second magnetic body 62 are different from each other. Therefore, the degree of wear of the first magnetic body 61, in other words, the degree of wear of the tread portion 34, can be detected on the basis of the direction of the magnetic force line detected at the position where the magnetic sensor 63 is disposed. From such a viewpoint, the magnetic sensor 63 is preferably one that can detect at least the direction of the magnetic force line at the position where the magnetic sensor 63 is disposed. With such a magnetic sensor 63, the direction of the magnetic force line at the position where the magnetic sensor 63 is disposed is detected. A change in the magnetic field generated by the first magnetic body 61 and the second magnetic body 62 can be obtained on the basis of the detected direction of the magnetic force line, and, furthermore, the degree of wear of the tread portion 34 can be detected. Even in the case where the magnitude of the magnetic flux density detected by the magnetic sensor 63 is influenced by the temperature, there is a correlation between the direction of the magnetic force line detected by the magnetic sensor 63 and the degree of wear of the tread portion 34. Therefore, the degree of wear of the tread portion 34 can be obtained on the basis of the direction of the magnetic force line detected by the magnetic sensor 63. As described above, even in the case where the magnitude of the magnetic flux density detected by the magnetic sensor 63 is influenced by the temperature, the degree of wear of the tread portion 34 can be obtained with high accuracy.

Moreover, the tire cords such as the belt 43 may be magnetized. Even in the case where the tire cords such as the belt 43 are magnetized, the influence of the magnetic force lines emitted from the tire cords is constant at the position where the magnetic sensor 63 is disposed. The direction of the magnetic force line detected by the magnetic sensor 63 is less likely to change even due to the influence of the magnetic force lines emitted from the tire cords. As described above, the tire 10 is less likely to be influenced by disturbances such as the magnetization of the tire cords, and the degree of wear of the first magnetic body 61 can be accurately obtained by the magnetic sensor 63.

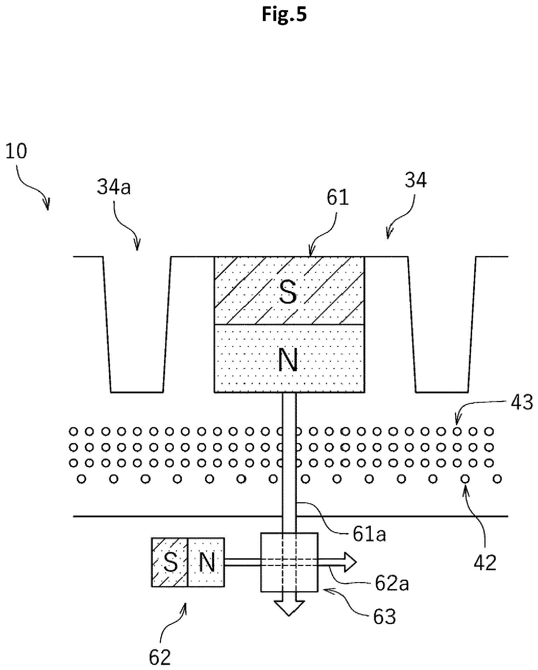

FIG. 5 is a schematic diagram showing a modification of the tire 10. In the form shown in FIG. 5, the second magnetic body 62 is located next to the magnetic sensor 63 on the inner surface of tire 10. The north pole of the second magnetic body 62 is directed to the magnetic sensor 63, and the south pole of the second magnetic body 62 is directed to the side opposite from the magnetic sensor 63. In the form shown in FIG. 5, the magnetic force line 61a of the first magnetic body 61 is directed in the thickness direction of the tire 10 at the position where the magnetic sensor 63 is disposed. The magnetic force line 62a of the second magnetic body 62 is directed along a plane orthogonal to the thickness direction of the tire 10. In this case as well, as shown in FIG. 5, the magnetic force line 62a of the second magnetic body 62 is orthogonal to the magnetic force line 61a of the first magnetic body 61. As described above, the arrangement and the orientation of the second magnetic body 62 are not limited to those in the form shown in FIG. 2, and can be changed as appropriate.

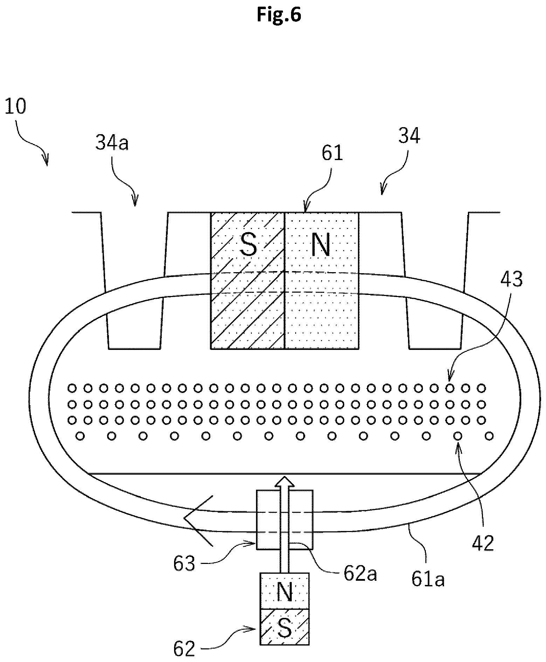

FIG. 6 is a schematic diagram showing another modification of the tire 10. In the form shown in FIG. 6, the direction of the magnetic force line 61a of the first magnetic body 61 is directed along a plane orthogonal to the thickness direction of the tire 10 at the position where the magnetic sensor 63 is disposed. In this embodiment, each of the north pole and the south pole of the first magnetic body 61 are directed in the width direction of the tire 10 in the tread portion 34 of the tire 10. In this case, the magnetic force line 61a of the first magnetic body 61 is formed in a loop shape from the north pole to the south pole in the thickness direction of the tire 10, and is formed substantially in a direction along the inner peripheral surface of the tire 10, at the inner peripheral surface of the tire 10. On the other hand, the magnetic force line 62a of the second magnetic body 62 is overlapped with the magnetic sensor 63 in the thickness direction and is directed in the thickness direction of the tire 10 at the position where the magnetic sensor 63 is disposed.

In this case, the first magnetic body 61 is also worn as the tire 10 is worn. Then, as the tire 10 is worn, the magnetic flux density of the magnetic force line 61a of the first magnetic body 61 observed at the position where the magnetic sensor 63 is disposed becomes lower. On the other hand, the magnetic flux density of the magnetic force line 62a of the second magnetic body 62 observed at the position where the magnetic sensor 63 is disposed does not change. Therefore, the direction of the magnetic flux density observed at the position where the magnetic sensor 63 is disposed changes as the first magnetic body 61 is worn. Therefore, the degree of wear of the tire 10 can be detected on the basis of the direction of the magnetic flux density detected by the magnetic sensor 63.

As shown in FIG. 6, the magnetic force line 61a of the first magnetic body 61 may be directed along a plane orthogonal to the thickness direction of the tire 10 at the position where the magnetic sensor 63 is disposed. In addition, the magnetic force line 62a of the second magnetic body 62 may be directed in the thickness direction of the tire 10. Here, the magnetic force line 61a of the first magnetic body 61 and the magnetic force line 62a of the second magnetic body 62 are generally orthogonal to each other at the position where the magnetic sensor 63 is disposed. In order to realize such a configuration, the postures and the orientations of the first magnetic body 61 and the second magnetic body 62 are predetermined with respect to the magnetic sensor 63.

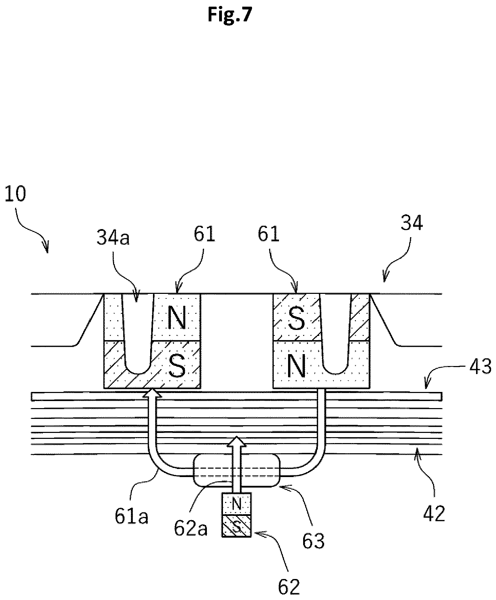

FIG. 7 is a schematic diagram showing still another modification of the tire 10. As shown in FIG. 7, the first magnetic body 61 may be disposed at each of two locations slightly separated from each other in the tread portion 34. In this case, the north pole of one of the two first magnetic bodies 61 is preferably directed to the radially inner side in the thickness direction of the tread portion 34. In addition, the south pole of the other first magnetic body 61 is preferably directed to the radially inner side. The magnetic sensor 63 is preferably disposed on the inner surface of the tire 10 between the two first magnetic bodies 61. Preferably, the second magnetic body 62 is stacked on the magnetic sensor 63 on the radially inner side of the tire 10, and the north pole thereof is directed to the magnetic sensor 63. In this case, as shown in FIG. 7, at the position where the magnetic sensor 63 is disposed, the magnetic force line 61a of the first magnetic body 61 and the magnetic force line 62a of the second magnetic body 62 are generally orthogonal to each other. The direction of the magnetic flux density observed at the position where the magnetic sensor 63 is disposed changes as the first magnetic body 61 is worn. Therefore, the degree of wear of the tire 10 can be detected on the basis of the direction of the magnetic flux density detected by the magnetic sensor 63. As described above, a plurality of the first magnetic bodies 61 may be provided in the tread portion 34.

In the tire 10 disclosed herein, as described above, at the position where the magnetic sensor 63 is disposed, the direction of the magnetic force line 61a emitted by the first magnetic body 61 and the direction of the magnetic force line 62a emitted by the second magnetic body 62 are different from each other. In the tire 10, the first magnetic body 61, which is disposed in the tread portion 34, is worn as the tread portion 34 is worn. Accordingly, the magnetic flux density of the magnetic force line 61a of the first magnetic body 61 becomes lower. The magnetic flux density of the magnetic force line 61a of the first magnetic body 61 becoming lower is evaluated relative to the magnetic flux density of the magnetic force line 62a of the second magnetic body 62. Therefore, the degree of wear of the tire 10 can be detected on the basis of the magnetic flux density observed at the position where the magnetic sensor 63 is disposed.

From such a viewpoint, in the above-described embodiment, the magnetic force line 61a of the first magnetic body 61 and the magnetic force line 62a of the second magnetic body 62 are generally orthogonal to each other at the position where the magnetic sensor 63 is disposed. In this case, when the magnetic flux density of the magnetic force line 61a of the first magnetic body 61 becomes low, a change in the direction of the magnetic force line observed at the position where the magnetic sensor 63 is disposed appears significantly. Therefore, it is easy to evaluate the wear of the tread portion 34. However, as described above, at the position where the magnetic sensor 63 is disposed, the direction of the magnetic force line 61a emitted by the first magnetic body 61 and the direction of the magnetic force line 62a emitted by the second magnetic body 62 are preferably different from each other. Unless otherwise specified, the present invention is not limited to the fact that the magnetic force line 61a of the first magnetic body 61 and the magnetic force line 62a of the second magnetic body 62 are orthogonal to each other at the position where the magnetic sensor 63 is disposed.

The magnetic sensor 63 is preferably capable of detecting the magnetic flux density caused by both the magnetic force line 61a of the first magnetic body 61 and the magnetic force line 62a of the second magnetic body 62. From such a viewpoint, the magnetic sensor 63 and the second magnetic body 62 are preferably provided at an inner portion in the thickness direction of the tread portion 34 at the position where the first magnetic body 61 is provided. In addition, the magnetic flux density detected at the position where the magnetic sensor 63 is disposed may be subjected to temperature correction as appropriate.

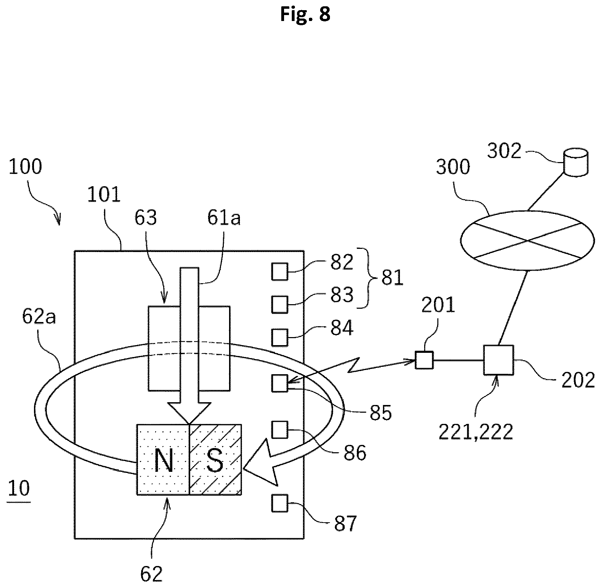

FIG. 8 is a schematic diagram showing a sensor module 100. As shown in FIG. 8, the sensor module 100 includes the second magnetic body 62 and the magnetic sensor 63. In the form shown in FIG. 8, the second magnetic body 62 and the magnetic sensor 63 may be incorporated in one sensor module. In the sensor module 100, for example, the second magnetic body 62 and the magnetic sensor 63 may be disposed at predetermined positions on one substrate 101. In this case, since the positional relationship between the magnetic sensor 63 and the second magnetic body 62 is determined, it is easy to predict the magnetic flux density of the magnetic force line 62a of the second magnetic body 62 at the position where the magnetic sensor 63 is disposed.

As shown in FIG. 8, the tire 10 may include a power supply 81 for supplying electric power to the magnetic sensor 63. The power supply 81 may be, for example, a button battery. In addition, the tire 10 may include a power generation element 82 for supplying electric power to the magnetic sensor 63. As the power generation element 82, one having performance capable of functioning as the power supply 81 for supplying electric power to the magnetic sensor 63 can be adopted. As the power generation element 82, a piezoelectric element, a vibration power generation element, an electromagnetic induction element, a magnetostrictive power generation element, a triboelectric charging element, or the like can be used. In addition, as for an energy source for power generation, kinetic energy such as vibration and inertial force obtained inside the tire is preferably used. The tire 10 may include a power storage element 83 for storing the electric energy generated by the power generation element 82.

As shown in FIG. 8, the tire 10 may include a temperature sensor 84. As the temperature sensor 84, a thermostat IC including a sensor and a temperature detection circuit, or the like can be adopted. The temperature sensor 84 preferably has, for example, an operating temperature of about -40°C to 60°C. As the temperature sensor 84, various commercially available ones having appropriate performance as those attached to the tire 10 can be adopted. As shown in FIG. 8, the tire 10 may include a transmitting/receiving device 85 for outputting the signal of the magnetic sensor 63 to an external device. As the transmitting/receiving device 85, an appropriate wireless communication circuit can be adopted.

The tire 10 may include a pressure sensor 86 and an acceleration sensor 87. For example, the pressure sensor 86 can be used to detect the pressure of the tire 10. In addition, the acceleration sensor 87 is preferably, for example, a sensor that detects acceleration. For example, the degree of wear of the tread portion 34 is preferably determined on the basis of the detection result of the magnetic flux density obtained by the magnetic sensor 63 at a specific timing obtained on the basis of data of the acceleration sensor 87.

In the example shown in FIG. 8, the power generation element 82, the power storage element 83, the temperature sensor 84, the transmitting/receiving device 85, the pressure sensor 86, and the acceleration sensor 87 are mounted on the one substrate 101 of the sensor module 100 on which the second magnetic body 62 and the magnetic sensor 63 are mounted. As described above, the sensors provided to the tire 10 may be mounted on the one substrate 101. In this case, a mounting portion for mounting the sensor module 100 is preferably provided in advance on the inner surface of the tire 10. Accordingly, the sensor module 100 is configured to be mounted at a predetermined position on the inner surface of the tire 10 in a predetermined posture. In this case, since various sensors are collectively provided in the sensor module 100, it is easy to mount the sensors on the tire 10. Regardless of the form shown in FIG. 8, unless otherwise specified, the power generation element 82, the power storage element 83, the temperature sensor 84, the transmitting/receiving device 85, the pressure sensor 86, and the acceleration sensor 87 may be provided in a sensor module 100 different from that for the second magnetic body 62 and the magnetic sensor 63.

As the transmitting/receiving device 85, for example, a transmitting/receiving device 201 compatible with a vehicle on which the tire 10 is to be mounted is preferably disposed. Data obtained from various sensors is preferably sent to an electronic control circuit 202 (ECU) of the vehicle. The electronic control circuit 202 is preferably configured such that wear data of the tread portion 34 of the tire 10 is recorded in the vehicle.

The electronic control circuit 202 of the vehicle includes, for example, a storage unit 221 and a wear degree acquisition unit 222. The storage unit 221 stores therein the direction of the initial magnetic force line detected by the magnetic sensor 63. The direction of the initial magnetic force line is the direction of the magnetic force line detected by the magnetic sensor 63 in the tire 10 (see FIG. 1) that is new. For example, at the time of being replaced with a new tire 10, the direction of the magnetic force line detected by the magnetic sensor 63 is preferably stored in the storage unit 221. In addition, the wear degree acquisition unit 222 is preferably configured to acquire the degree of wear of the tread portion 34 on the basis of the direction of the magnetic force line detected by the magnetic sensor 63 and the direction of the initial magnetic force line. For example, as shown in FIG. 3 and FIG. 4, the direction of the magnetic force line detected by the magnetic sensor 63 is changed in the tire 10 in which the tread portion 34 has been worn, from that in the initial tire 10. The wear degree acquisition unit 222 is preferably configured to acquire the degree of wear of the tread portion 34, for example, on the basis of this change in the direction of the magnetic force line.

Furthermore, as shown in FIG. 8, the wear data of the tread portion 34 (see FIG. 1) of the tire 10 may be recorded in a cloud server 302 through a communication network 300. In such a configuration, the wear data of the tread portion 34 of the tire 10 of the vehicle is preferably recorded in the cloud server 302. Accordingly, the wear of the tire 10 of the vehicle can be remotely recorded. In this case, the cloud server 302 may be configured to notify the vehicle of the degree of wear of the tire 10 or notify the vehicle, in which the tire 10 has been worn, of the tire replacement time. The tire replacement times for a plurality of vehicles can be collectively managed by the cloud server 302. In addition, in the case where the tire 10 is a re-tread tire, the reproduction times for the tread portions in a plurality of tires of a plurality of vehicles can be collectively managed by the cloud server 302.

While the tire and the wear degree detection system disclosed herein have been described above in various ways, the tire and the wear degree detection system disclosed herein are not limited to the above-described embodiment and modifications unless otherwise specified. In addition, the various configurations of the embodiment and the modifications described can be appropriately combined as long as the configurations do not interfere with each other.

## Claims

1. A tire (10) comprising:
a tread portion (34) having a continuous ground-contact surface along an outer peripheral surface of the tire (10) in a circumferential direction;
a first magnetic body (61) disposed at a predetermined position in the tread portion (34);
a magnetic sensor (63) disposed radially inward of the first magnetic body (61); and
a second magnetic body (62) disposed closer to the magnetic sensor (63) than the first magnetic body (61) is, wherein
at a position where the magnetic sensor (63) is disposed, a direction of a magnetic force line (61a) emitted by the first magnetic body (61) and a direction of a magnetic force line (62a) emitted by the second magnetic body (62) are different from each other.

2. The tire (10) according to claim 1, wherein the magnetic sensor (63) detects a direction of a magnetic force line at the position where the magnetic sensor (63) is disposed.

3. The tire (10) according to claim 1 or 2, wherein the magnetic force line (61a) of the first magnetic body (61) is directed in a thickness direction of the tire (10) at the position where the magnetic sensor (63) is disposed.

4. The tire (10) according to claim 3, wherein the magnetic force line (62a) of the second magnetic body (62) is directed along a plane orthogonal to the thickness direction of the tire (10) at the position where the magnetic sensor (63) is disposed.

5. The tire (10) according to claim 1 or 2, wherein the magnetic force line (61a) of the first magnetic body (61) is directed along a plane orthogonal to a thickness direction of the tire (10) at the position where the magnetic sensor (63) is disposed.

6. The tire (10) according to claim 5, wherein the magnetic force line (62a) of the second magnetic body (62) is directed in the thickness direction of the tire (10) at the position where the magnetic sensor (63) is disposed.

7. The tire (10) according to any one of claims 1 to 6, wherein the magnetic sensor (63) and the second magnetic body (62) are provided at an inner portion in a thickness direction of the tread portion (34) at the position where the first magnetic body (61) is provided.

8. The tire (10) according to any one of claims 1 to 7, wherein the magnetic sensor (63) and the second magnetic body (62) are disposed at predetermined positions on one substrate (101).

9. The tire (10) according to any one of claims 1 to 8, wherein the magnetic sensor (63) is at least any one of an SMR element, an AMR element, a GMR element, a TMR element, a Hall element, and a magneto-impedance element.

10. The tire (10) according to any one of claims 1 to 9, further comprising a power supply (81) for supplying electric power to the magnetic sensor (63).

11. The tire (10) according to any one of claims 1 to 10, further comprising a power generation element (82) for supplying electric power to the magnetic sensor (63).

12. The tire (10) according to any one of claims 1 to 11, further comprising a temperature sensor (84).

13. The tire (10) according to any one of claims 1 to 12, further comprising a transmitting/receiving device (201) for outputting a signal of the magnetic sensor (63) to an external device.

14. The tire (10) according to any one of claims 1 to 13, further comprising an acceleration sensor (87).

15. A wear degree detection system comprising:
the tire (10) according to any one of claims 1 to 14;
a storage unit (221) storing therein a direction of an initial magnetic force line detected by the magnetic sensor (63); and
a wear degree acquisition unit (222) configured to acquire a degree of wear of the tread portion (34) on the basis of the direction of the magnetic force line detected by the magnetic sensor (63) and the direction of the initial magnetic force line.
